# EUROPÄISCHE PATENTSCHRIFT

(11) **EP 3 003 971 B1**
(45) Veröffentlichungstag und Bekanntmachung des Hinweises auf die Patenterteilung: **15.11.2017**
(21) Anmeldenummer: 13727594.7
(22) Anmeldetag: 05.06.2013
(51) Int. Cl.: C01B 21/087, B01D 3/14, C07F 7/02, C08G 77/62

(54) **VERFAHREN ZUR GEKOPPELTEN HERSTELLUNG VON TRISILYLAMIN UND POLYSILAZANEN MIT EINER MOLMASSE BIS 500 G/MOL**
METHOD FOR THE COUPLED PRODUCTION OF TRISILYLAMINE AND POLYSILAZANES HAVING A MOLAR MASS OF UP TO 500 G/MOL
PROCÉDÉ DE PRODUCTION COUPLÉE DE TRISILYLAMINE ET DE POLYSILAZANES DE MASSE MOLAIRE ALLANT JUSQU'À 500 G/MOL

(30) Priorität: 27.05.2013 DE 102013209802
(43) Veröffentlichungstag der Anmeldung: 13.04.2016
(73) Patentinhaber: Evonik Degussa GmbH, 45128 Essen (DE)
(72) Erfinder: HOPPE, Carl-Friedrich, 63584 Gründau (DE); GÖTZ, Christian, 11148 Taipei (TW); UEHLENBRUCK, Goswin, 61440 Oberursel (DE); RAULEDER, Hartwig, 79618 Rheinfelden (DE)
(86) Internationale Anmeldenummer: PCT/EP2013/061541
(87) Internationale Veröffentlichungsnummer: WO 2014/191058

(56) Entgegenhaltungen:
- WO-A1-2012/156191
- WO-A1-2013/004423
- RICHARD L. WELLS ET AL: JOURNAL OF THE AMERICAN CHEMICAL SOCIETY, Bd. 88, Nr. 1, 5. Januar 1966 (1966-01-05) , Seiten 37-42, XP055080155, ISSN: 0002-7863, DOI: 10.1021/ja00953a008 in der Anmeldung erwähnt

## Beschreibung

Die vorliegende Erfindung betrifft ein Verfahren zur Herstellung von Trisilylamin und Polysilazanen mit einer Molmasse bis 500 g/mol in der Flüssigphase, indem man Ammoniak überstöchiometrisch gegenüber Monochlorsilan, das in inertem Lösungsmittel vorliegt, dosiert. Hierbei läuft eine Reaktion ab, bei der neben Trisilylamin Polysilazane bis zu einer Molmasse von 500 g/mol entstehen. Anschließend wird TSA aus dem Produktgemisch gasförmig abgetrennt. Das erhaltene TSA wird durch Filtration und Destillation aufgereinigt und in hoher oder höchster Reinheit erhalten. Das Sumpfproduktgemisch wird aus dem Reaktor durch eine Filtereinheit geführt, wobei festes Ammoniumchlorid abgetrennt wird, und man ein flüssiges Gemisch aus Polysilazanen und Lösungsmittel erhält. Dieses wird zur Rückgewinnung von Lösungsmittel einer weiteren Destillation zugeführt.

Durch die direkte stöchiometrische Überdosierung von NH₃ gegenüber Monochlorsilan wird Monochlorsilan im Reaktor vollständig umgesetzt. Hierdurch wird in nachgelagerten Anlagenteilen zur Aufreinigung des TSAs die Reaktion von Monochlorsilan mit zusätzlichem, in geringen Mengen gebildetem Disilylamin (in Folgendem als "DSA" bezeichnet) unter Bildung von festem Ammoniumchlorid vollständig verhindert. Die im Anschluss an den Reaktor filtrierten Lösungen sind entsprechend vollständig frei von Feststoffen. Die eingesetzten Destillationskolonnen enthalten nach Abschluss der Destilliervorgänge keinerlei Feststoffe bzw. Ablagerungen.

Polysilazane sind Polymere mit einer Grundstruktur aus Silizium- und Stickstoffatomen in alternierender Reihenfolge. Einen Überblick findet man zum Beispiel bei http://de.wikipedia.org/wiki/Polysilazane oder bei M. Weinmann, "Polysilazanes" in "Inorganic Polymers", Herausgeber R. De Jaeger und M. Gleria, S. 371-413.

Bei Polysilazanen ist zumeist jedes Siliziumatom an zwei Stickstoffatome, bzw. jedes Stickstoffatom an zwei Siliziumatome gebunden, so dass diese vorwiegend als molekulare Ketten der Formel [R₁R₂Si-NR₃]ₙ beschrieben werden können. Die Reste R₁, R₂ und R₃ können Wasserstoffatome oder organische Restgruppen sein. Falls nur Wasserstoffatome als Substituenten vorhanden sind, bezeichnet man die Polymere als Perhydropolysilazane [H₂Si-NH]ₙ. Sind Kohlenwasserstoffreste am Silizium und/oder Stickstoff gebunden, spricht man von Organopolysilazanen.

Polysilazane sind farblose bis gelbe Flüssigkeiten oder Feststoffe, übergehend von ölig über wachsartig bis glasig, mit einer Dichte von ca. 1 kg/l. Die mittlere Molekülmasse kann von wenigen hundert bis über 100.000 g/mol betragen. Sowohl Molekülmasse als auch molekulare Makrostruktur bestimmen den Aggregatzustand und die Viskosität. Bei einer Molmasse über 10.000 g/mol beträgt der Schmelzpunkt 90-140 °C. Hochmolekulares Perhydropolysilazan [(SiH₂)NH]ₓ ist eine kieselsäureähnliche, weiße Substanz. Polysilazane können langsam unter Abspaltung von H₂ und/oder NH₃ altern.
Kleinere Moleküle können durch thermische Behandlung zu größeren Molekülen umgesetzt werden. Bei Temperaturen von 100 bis 300 °C findet eine Vernetzung der Moleküle unter Abspaltung von Wasserstoff und Ammoniak statt.

Polysilazane finden Verwendung als Beschichtungsmaterial sowie als Bestandteil von Hochtemperaturlacken von Korrosionsschutzsystemen. Da diese zusätzlich gute Isolatoren sind, werden diese in der Elektronik- und Solarindustrie eingesetzt. In der Keramikindustrie werden diese als präkeramische Polymere verwendet. Weiterhin dienen Polysilazane zur Hochleistungsbeschichtung von Stahl zum Schutz vor Oxidation. Sie werden im Handel als 20 Gew.-%ige Lösung vertrieben.

Die Herstellung von Polysilazanen kann aus Chlorsilanen bzw. Kohlenwasserstoff substituierten Chlorsilanen und Ammoniak bzw. Kohlenwasserstoff substituierten Aminen erfolgen (neben Ammoniak und Aminen kann die Umsetzung ebenfalls mit Hydrazin erfolgen). Neben den Polysilazanen entstehen bei der Reaktion Ammoniumchlorid bzw. Kohlenwasserstoff substituierte Aminochloride, die abgetrennt werden müssen. Bei den Umsetzungen handelt es sich grundsätzlich um spontane, exotherme Reaktionen.

Im Stand der Technik ist die Herstellung von Polysilazanen anhand der Umsetzung von Monochlorsilan, Dichlorsilan bzw. Trichlorsilan jeweils mit Ammoniak bekannt, wobei der Einsatz von Monohalogensilanen, Dihalogensilanen bzw. Trihalogensilanen möglich ist. Hierbei entstehen Perhydropolysilazane. Beim Einsatz von Kohlenwasserstoff substituierten Edukten wird die Bildung von Organopolysilazanen erwartet. Die bei den Synthesen unter dem Einsatz von Dichlor- und Trichlorsilanen erhaltenen hochmolekularen Polysilazane weisen eine geringe Löslichkeit auf, so dass sie sich nur schlecht vom gleichzeitig anfallenden Ammoniumchlorid abtrennen lassen.

Findet die Umsetzung von Ammoniak mit *Dichlorsilan* statt, werden direkt höhermolekulare Polysilazane gebildet, wie in den Schriften CN 102173398, JP 61072607, JP 61072614, JP 10046108, US 4397828, WO 91/19688 offenbart. x beträgt in der nachfolgenden Reaktionsgleichung mindestens 7.

(1) 3 NH₃ + H₂SiCl₂ → 2 NH₄Cl + [SiH₂(NH)]ₓ

Bei der Umsetzung von Ammoniak mit *Trichlorsilan* bilden sich direkt 3-dimensionale Raumstrukturen der Polysilazane gemäß nachfolgender Reaktionsgleichung.

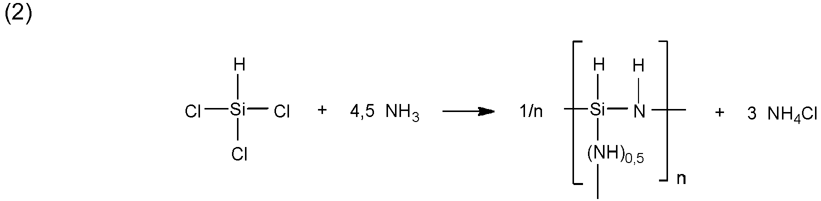

Die oben genannten Synthesewege lassen sich unter Verwendung eines Lösungsmittels durchführen. Eine weitere Möglichkeit besteht darin, Halogensilan in flüssigem Ammoniak zu dosieren, wie dies die Anmeldeschrift WO 2004/035475 vorsieht. Hierdurch kann die Abtrennung des Ammoniumhalogenids von den Polysilazanen erleichtert werden, denn das Ammoniumhalogenid löst sich im Ammoniak, während die Polysilazane eine zweite flüssige Phase bilden. Die Flüssigkeiten lassen sich durch eine Phasentrennung voneinander separieren.

Neben der Herstellung unter Einsatz von Halogensilanen in einem Lösungsmittel und in flüssigem Ammoniak existieren noch weitere Verfahren ohne zusätzliche Bildung von Salzen. Hierzu zählen die katalytische Dehydrokupplung, Umverteilungsreaktionen, Ringöffnungspolymerisationen, die an anderer Stelle beschrieben sind (M. Weinmann, Polysilazanes, in Inorganic Polymers, Editors: R. De Jaeger, M. Gleria, S. 371-413). Diese Methoden werden nicht großtechnisch eingesetzt, um Polysilazane herzustellen.

Es besteht ein großes Interesse an einer kommerziellen Herstellung von Trisilylamin, N(SiH₃)₃. Dieses wird bei den oben genannten Umsetzungsrouten nicht gebildet. Vielmehr erfolgt seine Bildung aus der Umsetzung von Monochlorsilan und Ammoniak gemäß Gleichung (3):

(3) 4 NH₃ + 3 H₃SiCl → 3 NH₄Cl + (SiH₃)₃N

Die Substanz, an dieser Stelle und im Folgenden mit *"TSA"* abgekürzt, ist eine leicht bewegliche, farblose und leicht hydrolysierbare Flüssigkeit mit Schmelzpunkt -105,6 °C und Siedepunkt +52 °C. TSA wie andere stickstoffhaltige Siliziumverbindungen sind wichtige Substanzen in der Halbleiterindustrie.

Es ist lange bekannt, TSA für die Erzeugung von Siliziumnitrid-Schichten einzusetzen, beschrieben z.B. in den Schriften US 4,200,666 und JP 1986-96741. TSA findet insbesondere Verwendung bei der Chip-Herstellung als Schicht-Präkursor für Siliziumnitrid- oder Siliciumoxynitrid-Schichten. Ein spezielles Verfahren zur Anwendung von TSA offenbart die unter WO 2004/030071 veröffentlichte Anmeldung, bei der klar wird, dass bei der Anwendung in der Chip-Herstellung die sichere, störungsfreie und in hochreiner Qualität konstante Produktion von TSA besonders wichtig ist.

Ein Aufsatz des J. Am. Chem. Soc. 88, Seiten 37 ff, 1966, beschreibt die Umsetzung im Labormaßstab von gasförmigem Monochlorsilan mit Ammoniak zu TSA bei langsamer Zugabe von Ammoniak, wobei zugleich Polysilazane und Ammoniumchlorid auftraten. Damit ist die simultane Erzeugung von TSA und Polysilazanen im Prinzip zwar bekannt. Die großtechnische Herstellung beider Substanzen scheitert bislang jedoch an einer Reihe von Problemen. So fällt Ammoniumchlorid in fester Form an und kann zur Verstopfung von Apparaten und Leitungen führen. TSA und Polysilazane lassen sich weder trennen, noch in den für die interessierenden Märkte erforderlichen Reinheiten produzieren. Außerdem gelingt es bislang nicht, das Mengenverhältnis von TSA zu den zusätzlich erhaltenen Polysilazanen einzustellen. Eine Herstellung von TSA und Polysilazanen in ein- und demselben Prozess, der über den Labormaßstab hinausgeht, war also bislang nicht möglich.

In der Patentanmeldung DE 10 2012 214290.8 wird ein Verfahren zur gekoppelten Herstellung von Polysilazanen und Trisilylamin offenbart, bei dem die Herstellung von TSA und Polysilazanen durch Umsetzung von Monochlorsilan durch Zugabe von zunächst einem stöchiometrischen Unterschuss an Ammoniak erfolgt. Anschließend wird TSA aus dem Produktgemisch gasförmig abgetrennt. Erst im Anschluss daran erfolgt die Zugabe von weiterem Ammoniak, so dass in diesem Schritt erst ein stöchiometrischer Überschuss des insgesamt zudosierten Ammoniaks gegenüber der ursprünglich vorgelegten Menge an Monochlorsilan resultiert. Monochlorsilan ist durch die Zugabe des zunächst stöchiometrischen Unterschusses an Ammoniak in den Reaktor nicht vollständig umgesetzt. Entsprechend gelangen bei der sich anschließenden gasförmigen Abtrennung von TSA Monochlorsilan sowie in geringen Mengen gebildetes Disilylamin mit in die TSA-Produktlösung. Disilylamin und Monochlorsilan reagieren miteinander. Diese Reaktion läuft langsam ab und ist mit der Ausfällung von weiterem Ammoniumchlorid verbunden. Hierdurch kommt es in der aus dem Reaktor abgezogenen TSA-Produktlösung bzw. in den Anlagenteilen, die dem Reaktor nachgeschaltet sind, zur Ausfällung von Ammoniumchlorid. Durch die langsam ablaufende Reaktion tritt die Ausfällung von Ammoniumchlorid entsprechend nach der Filtration im TSA-Produktlösungsfiltrat erneut auf. Insbesondere führt diese Reaktion zu Ammoniumchlorid-Ablagerungen in Destillationskolonnen, die zur Aufreinigung des TSAs dienen. Auch in der Anmeldeschrift WO 2013/004423 wird ein Verfahren zur gekoppelten Herstellung von Polysilazanen und Trisilylamin durch Umsetzung von Monosilan mit Ammoniak beschrieben. Aus dem erhaltenen Produktgemisch wird festes Ammoniumchlorid durch eine Filtereinheit abgetrennt, während die Flüssigphase in einer Serie von zwei Destillationskolonnen weiterbehandelt wird. Im Verfahren nach der WO 2013/004423 wird kein Lösungsmittel eingesetzt. Dieses Verfahren enthält daher keine Schritte zur Lösungsmittelrückgewinnung.

Aufgabe der Erfindung war es nun, ein kommerziell interessantes Verfahren bereit zu stellen, das beide Produkte gleichzeitig, in einstellbaren Mengen, und unter vollständiger Umgehung der oben genannten Nachteile und Limitierungen synthetisiert. Eine weitere Aufgabe war es, die nachträgliche Bildung von Ammoniumchlorid durch Reaktion von Monochlorsilan mit Disilylamin in Anlagenteilen zur Aufreinigung des TSA-Produktstroms außerhalb des Reaktors zu verhindern.

Diese Aufgabe wurde unerwartet gelöst, indem man Ammoniak direkt und in einem Schritt überstöchiometrisch gegenüber Monochlorsilan, das in inertem Lösungsmittel vorliegt, dosiert. Durch die stöchiometrische Überdosierung von NH₃ gegenüber Monochlorsilan wird Monochlorsilan im Reaktor vollständig umgesetzt. Durch die stöchiometrische Überdosierung von NH₃ gegenüber Monochlorsilan wird somit in nachgelagerten Anlagenteilen die Reaktion von Monochlorsilan mit zusätzlichem, in geringen Mengen gebildetem Disilylamin unter Bildung von festem Ammoniumchlorid verhindert. Die Reaktion wird in einem Reaktor durchgeführt, bei der neben Trisilylamin nach Gleichung (3) Polysilazane entstehen.

Anschließend wird TSA aus dem Produktgemisch gasförmig abgetrennt. Das erhaltene TSA wird durch Filtration und Destillation aufgereinigt und wird in hoher oder höchster Reinheit erhalten. Anschließend wird das Sumpfproduktgemisch aus dem Reaktor durch eine Filtereinheit geführt, wobei festes Ammoniumchlorid abgetrennt wird, und man ein flüssiges Gemisch aus Polysilazanen und Lösungsmittel erhält. Der größte Teil des Lösungsmittels kann durch destillative Abtrennung aus dem Gemisch von Polysilazanen und Lösungsmittel zurückgewonnen werden. Die filtrierten Lösungen sind vollständig frei von Ammoniumchlorid.
Die eingesetzten Destillationskolonnen enthalten nach Destillation kein festes Ammoniumchlorid.

Gegenstand der Erfindung ist also ein Verfahren zur Herstellung von Trisilylamin und Polysilazanen in der Flüssigphase, indem man
(a) zumindest Monochlorsilan (MCS) in einem Lösungsmittel (L) gelöst in einem Reaktor (1) flüssig vorlegt, wobei das Lösungsmittel gegenüber Monochlorsilan, Ammoniak, TSA, DSA und Polysilazanen inert ist und einen höheren Siedepunkt als TSA aufweist, und
(b) die Reaktion in Reaktor (1) durchführt, indem man Ammoniak (NH₃) in stöchiometrischem Überschuss gegenüber Monochlorsilan (MCS) in den Reaktor (1) einleitet, und
(c) den Reaktor entspannt, einen Druck von 0,5 bar a bis 0,8 bar a einstellt, das Produktgemisch (TSA, L, NH₄Cl, DSA, NH₃) aus Reaktor (1) gasförmig über Kopf durch eine Destilliereinheit (2) leitet, das NH₃ mittels einer Vakuumeinheit (8) abtrennt, das Produktgemisch (TSA, L, NH₄Cl, DSA) in einem Wärmetauscher (7) kondensiert und das Produktgemisch (TSA, L, NH₄Cl, DSA) in einem Behälter (6) auffängt, anschließend
(d) mittels Filtereinheit (3) filtriert, wobei festes Ammoniumchlorid (NH₄Cl) aus dem Produktgemisch abgetrennt wird,
   und man das Filtrat aus der Filtereinheit (3) in die Destillationskolonne (4) führt, in der man DSA über Kopf vom Gemisch (TSA, L) abtrennt, und
   das Gemisch (TSA, L) in eine Destillationskolonne (11) führt, in der man TSA über Kopf vom Lösungsmittel (L) abtrennt, wobei das Lösungsmittel zurückgewonnen wird,
   und man
(e) das Sumpfproduktgemisch (PS, L, NH₄Cl) aus dem Reaktor (1) durch eine Filtereinheit (5) führt, wobei festes Ammoniumchlorid (NH₄Cl) abgetrennt wird, und ein Gemisch aus Polysilazanen (PS) und Lösungsmittel (L) erhalten und in einem Behälter 9 aufgefangen wird,
   und man anschließend
(f) das Gemisch aus Polysilazanen (PS) und Lösungsmittel (L)
   einer Destillationskolonne (10) zuführt, in der der größte Teil des Lösungmittels über Kopf zurückgewonnen und ein aufkonzentriertes Gemisch aus Polysilazanen (PS) und Lösungsmittel (L) über den Sumpf abgezogen wird.

Das erfindungsgemäße Verfahren wird im Folgenden näher erläutert.

Vorzugsweise wird der bereit gestellte stöchiometrische Überschuss des in den Reaktor (1) eingeleiteten Ammoniaks (NH₃) gegenüber Monochlorsilan von 2 bis 20 %, besonders bevorzugt von 2 bis 10 % gewählt. Damit ist sichergestellt, dass das Monochlorsilan im Reaktor quantitativ mit NH₃ abreagiert. Das während Schritt (b) bei der Reaktion im Reaktor (1) erhaltene Produktgemisch enthält Ammoniumchlorid (NH₄Cl).

Das in dem erfindungsgemäßen Verfahren eingesetzte inerte Lösungsmittel (L) wird vorzugsweise so ausgewählt, dass Ammoniumhalogenide, besonders bevorzugt Ammoniumchlorid, darin unlöslich sind. Dies erleichtert sowohl das Abtrennen des Ammoniumhalogenids, bevorzugt des Ammoniumchlorids, im Schritt (d), als auch die Durchführung des Verfahrens bei der Gewinnung von Perhydropolysilazanen.

Vorzugsweise wird ein inertes Lösungsmittel eingesetzt, das weder ein Azeotrop mit TSA, DSA, noch mit den während der Durchführung des erfindungsgemäßen Verfahrens erhaltenen Polysilazanen bildet. Das inerte Lösungsmittel sollte bevorzugt schwerer flüchtig als TSA sein. Solche bevorzugten Lösungsmittel können ausgewählt sein aus Pyridin, Tetrahydrofuran, Diethylenglykoldimethylether, Triethylenglykoldimethylether, Tetraethylenglykoldimethylether, Toluol, Xylol und/oder Dibutylether.

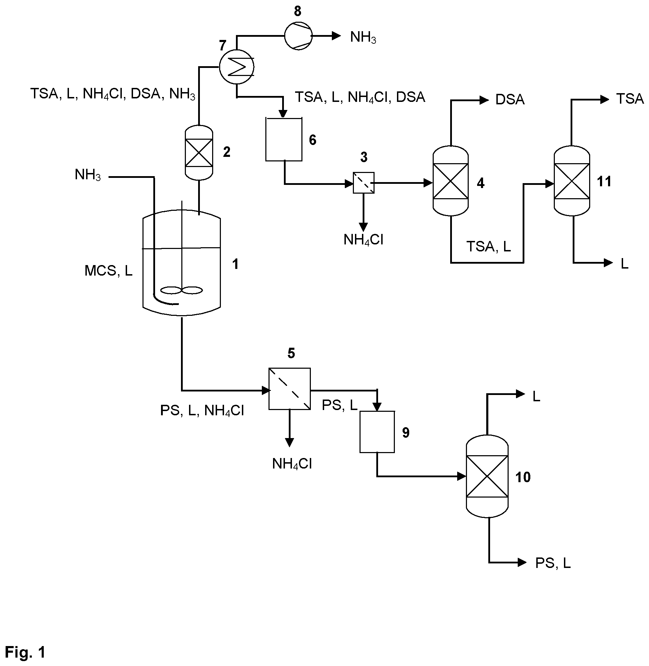

Ganz besonders bevorzugt wird als Lösungsmittel (L) Toluol eingesetzt. Wird in Toluol gelöstes Monochlorsilan in dem Reaktor flüssig vorgelegt und Ammoniak in den Reaktor wie in der **Fig. 1** dargestellt eingeleitet, entstehen TSA, Polysilazane, Ammoniumchlorid sowie in geringen Mengen DSA. TSA, Polysilazane und DSA sind in Toluol stabil. Außerdem ist Ammoniumchlorid in Toluol schwerlöslich, wodurch die Abtrennung von Ammoniumchlorid mittels Filtration erleichtert wird.

Weiterhin dient Toluol zur Verdünnung der Reaktorlösung sowie zur Aufnahme der Reaktionsenthalpie.

Es kann vorteilhaft sein, beim erfindungsgemäßen Verfahren das Lösungsmittel (L), bevorzugt Toluol, in einem volumenmäßigen Überschuss zu Monochlorsilan (MCS) einzusetzen. Vorzugsweise wird ein Volumenverhältnis der Flüssigkeiten Lösungsmittel zu Monochlorsilan von 30 : 1 bis 1 : 1, bevorzugt von 20 : 1 bis 3 : 1, besonders bevorzugt von 10 : 1 bis 3 : 1 eingestellt. Bei Volumenverhältnissen im Bereich von 3 : 1 bis 1 : 1 werden allerdings die Vorteile geringer. Dieser Überschuss sorgt für eine starke Verdünnung von Monochlorsilan, und diese wiederum steigert die Ausbeute an TSA. Ein weiterer Vorteil, L einem volumenmäßigen Überschuss zu Monochlorsilan (MCS) einzusetzen, besteht darin, dass die Konzentration an Ammoniumchlorid in der Reaktionslösung verringert und hierdurch wird die Reaktorrührung und -entleerung erleichtert wird. Zu große Überschüsse, z. B. oberhalb 30 : 1, verschlechtern allerdings die Raum-Zeit-Ausbeute im Reaktor.

Man füllt den Reaktor zur Durchführung der Umsetzung vorzugsweise bis zu 99 %, weiter bevorzugt von 5 bis 95 %, besonders bevorzugt von 20 bis 80 % des Reaktorvolumens mit Reaktionsgemisch der Einsatzstoffe sowie des Lösungsmittels.

Vorteilhaft führt man die Umsetzung des Reaktionsgemisches im Reaktor bei einer Temperatur von -60 bis +40 °C durch, vorzugsweise von -20 bis +10 °C, besonders bevorzugt von -20 bis + 5 °C, ganz besonders bevorzugt von -15 bis 0 °C. Die Umsetzung kann bei einem Druck von 0,5 bis 15 bar, insbesondere bei dem sich unter den vorgegebenen Reaktionsbedingungen einstellenden Druck durchgeführt werden. Die erhaltenen Polysilazane (PS) sind chlorfrei. Somit handelt es sich um Perhydropolysilazane.

Man führt die Umsetzung bevorzugt unter Schutzgas, beispielsweise Stickstoff und / oder einem Edelgas, bevorzugt Argon, und in Abwesenheit von Sauerstoff und Wasser, insbesondere in Abwesenheit von Feuchte durch, wobei man die vorliegende Anlage vor dem ersten Befüllvorgang vorzugsweise trocknet und mit Schutzgas spült.

Ferner stellt sich bei der Umsetzung im Reaktor durch die Vorlage von flüssigem Monochlorsilan gelöst in dem Lösungsmittel im Wesentlichen der Dampf/Flüssig-Gleichgewichtsdruck einer entsprechenden Mischung von Monochlorsilan, sowie in geringem Maße des entstehenden Trisilylamins, der Polysilazane sowie des in geringen Mengen entstehenden DSAs in dem Lösungsmittel ein. Ammoniak wirkt sich nicht auf den Dampf/Flüssig-Gleichgewichtsdruck aus solange Ammoniak beim Einleiten mit dem vorhandenen Monochlorsilan direkt abreagiert. Überdies beträgt die Löslichkeit von Ammoniak in Toluol 13,7 g/l (bei 1 bar a und 0 °C).

Im Anschluss an die Umsetzung im Schritt (b) wird der Reaktor entspannt, ein Druck von 0,5 bar a bis 0,8 bar a eingestellt und das Produktgemisch (TSA, L, NH₄Cl, DSA, NH₃) aus Reaktor (1) gasförmig über Kopf durch eine Destilliereinheit (2) geleitet.

Überschüssiger Ammoniak wird über eine Vakuumpumpe während der Kondensation des Produktgemisches (TSA, L, NH₄Cl, DSA) abgeführt.

Vorzugsweise kann in dem erfindungsgemäßen Verfahren das nach Schritt (c) erhaltene Destillat mittels Filtereinheit (3) filtriert werden, wobei festes Ammoniumchlorid (NH₄Cl) aus dem Destillat abgetrennt wird, man dieses Filtrat aus der Filtereinheit (3) in die Destillationskolonne (4) führt, in der man DSA über Kopf vom Gemisch (TSA, L) abtrennt und das Gemisch (TSA, L) in eine Destillationskolonne (11) führt, in der man TSA über Kopf vom Lösungsmittel (L) abtrennt. Der Vorteil besteht darin, dass damit TSA in einer Reinheit von über 99,5 Gew.-% erhalten wird.

Die im Reaktor (1) vorhandenen Polysilazane sind durch die Überschussdosierung von Ammoniak chlorfrei.

Die Perhydropolysilazane weisen vorzugsweise eine Molmasse von 120 bis 300 g/mol auf. Das erfindungsgemäß erhaltene Produktgemisch kann auch neuartige Perhydropolysilazane aufweisen, für die noch keine CAS-Nummern existieren. Beispielhafte Strukturformeln zeigt die **Tabelle 1.**

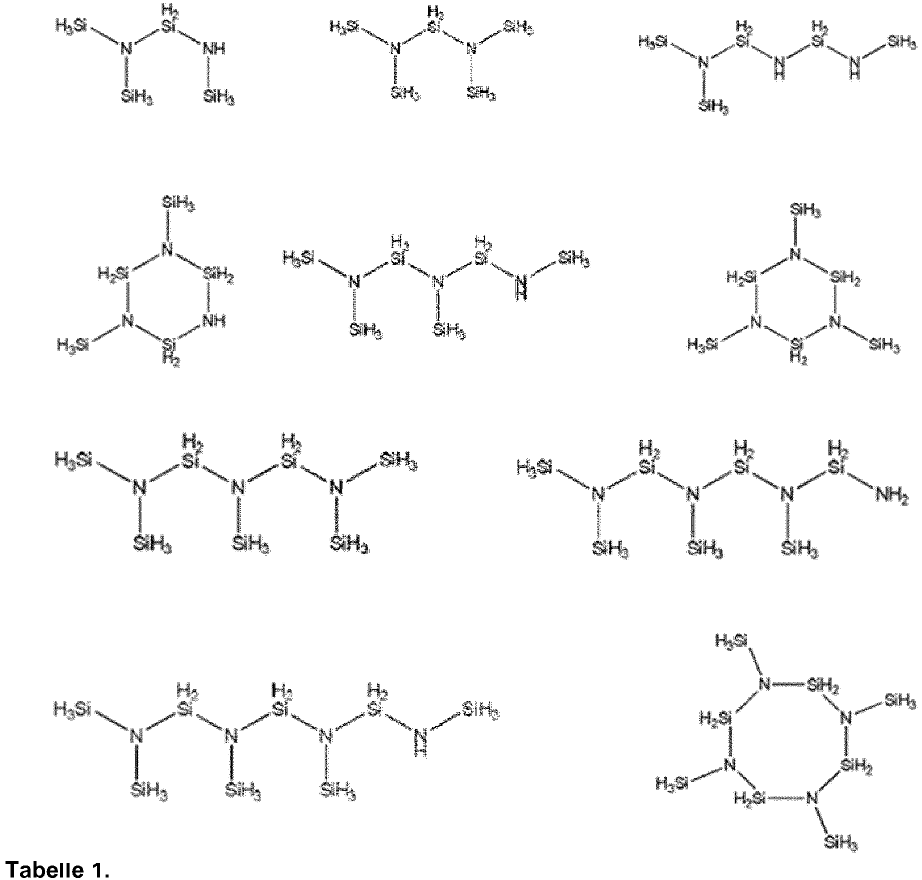

Im Schritt (e) wird das Sumpfproduktgemisch, das Perhydropolysilazane, Toluol und Ammoniumchlorid enthält, aus dem Reaktor (1) durch eine Filtereinheit (5) geführt, wobei festes Ammoniumchlorid aus dem Produktgemisch abgetrennt wird. Der Vorteil besteht im Zusammenhang mit dem Einsatz von MCS im Schritt (a) darin, dass die Filtration von Ammoniumchlorid zur Abtrennung von den Perhydropolysilazanen mit einer Molmasse von bis zu 500 g/mol leicht möglich ist. Eine Filtration von Ammoniumchlorid zur Abtrennung von Polysilazanen mit deutlich höheren Molmassen würde nicht vollständig gelingen, erübrigt sich in dem erfindungsgemäßen Verfahren jedoch auch, da Polysilazane mit deutlich höheren Molmassen als 500 g/mol nur dann entstehen, falls Dichlorsilan und/oder Trichlorsilan anstelle oder zusätzlich zu MCS im Schritt (a) vorgelegt würden.

Aus dem Gemisch aus Polysilazanen und Lösungsmittel wird im Anschluss durch Destillation das Lösungsmittel größtenteils verdampft, um das Lösungsmittel zurückzugewinnen und den Anteil an Polysilazanen in dem Gemisch zu erhöhen. Hieran anschließend lässt sich die aufkonzentrierte Lösung durch ein beliebiges Lösungsmittel, vorzugsweise Toluol oder Dibutylether, wieder aufnehmen und auf diese Weise eine Konzentration einstellen, die dem kommerziellen Bedarf angepasst ist. Beispielsweise kann eine 2 Gew.-%ige Lösung auf 10 Gew.-% erhöht und anschließend wieder auf 5 Gew.-% mittels Toluol oder Dibutylether verdünnt werden. Diese Ausprägung des erfindungsgemäßen Verfahrens erlaubt den Wechsel des Lösungsmittels und/oder die Bereitstellung von Gemischen aus Polysilazanen und mehreren, zumindest zwei Lösungsmitteln. Ebenfalls kann die Konzentration der erfindungsgemäß erhaltenen Polysilazane gezielt eingestellt werden, zum Beispiel nach einer ungenauen Destillation.

Das erfindungsgemäße Verfahren wird bzgl. Reaktion, Destillation des Produktgemisches (TSA, L, NH₄Cl, DSA, NH₃) aus dem Reaktor, Ablassen sowie Filtration des Sumpfproduktgemischs (PS, L, NH₄Cl) diskontinuierlich durchgeführt. Das erfindungsgemäße Verfahren wird bzgl. Filtration und Destillation des Produktgemisches (TSA, L, NH₄Cl, DSA) sowie Destillation des filtrierten Sumpfproduktgemisches (PS, L) kontinuierlich durchgeführt. Rückführungsmöglichkeiten von Komponenten insbesondere des Lösungsmittels im Anschluss an die Destillationen in den Destillationskolonnen (10), (11) können hierdurch genutzt werden.

Es kann vorteilhaft sein, im Schritt (e) des erfindungsgemäßen Verfahrens die Filtration des Sumpfproduktgemisches (PS, L, NH₄Cl) bei einer Temperatur kleiner oder gleich Raumtemperatur, besonders bevorzugt bei Raumtemperatur durchzuführen, wobei ein klares Filtrat erhalten wird, und/oder im Schritt (f) die Destillation des Gemisches aus Polysilazanen (PS) und Lösungsmittel (L) bei 0,5 bar a durchzuführen.
Der Vorteil der Option im Schritt (f) besteht darin, dass die Polysilazane
thermisch geschont werden. Ein solcher Vorteil stellt sich ebenfalls bei anderen Unterdrücken in Schritt (f) ein.
Unter Raumtemperatur wird im Rahmen der Erfindung eine Temperatur von 20 °C verstanden.

Besonders bevorzugt kann im Schritt (f) die abdestillierbare Menge an Lösungsmittel frei nach Kenntnis des Fachmanns gewählt werden, wobei darauf zu achten ist, dass keine Polysilazane mit über Kopf gehen bzw. die Viskosität des Sumpfes stark ansteigt. Falls dabei Toluol als Lösungsmittel (L) eingesetzt wird, hat das erfindungsgemäße Verfahren den besonderen Vorteil, dass sogar bei einem kleineren Rücklaufverhältnis als aus dem fachüblichen Bereich von 2 bis 15, nämlich bevorzugt von 1, reines Toluol über Kopf abgezogen werden kann.

Gegenstand der Erfindung ist ebenfalls eine Anlage für die Umsetzung der Edukte zumindest Monochlorsilan (MCS) in einem Lösungsmittel (L) und Ammoniak in der Flüssigphase unter
Bildung eines Produktgemisches enthaltend Trisilylamin und Polysilazane, umfassend
- einen Reaktor (1) mit den Zuführungen für die Komponenten Ammoniak, zumindest Monochlorsilan sowie Lösungsmittel (L), und
   einem Auslass für Produktgemisch (TSA, L, NH₄Cl, DSA, NH3), der in eine dem Reaktor (1)
   - nachgeschaltete Destilliereinheit (2), einen nachgeschalteten Wärmeaustauscher (7) mit angeschlossener Vakuumpumpe (8) und einen Behälter (6) mündet, der mit einer Leitung zu
   - einer Filtereinheit (3) ausgestattet ist, die zumindest einen Feststoffauslass für NH₄Cl und
      eine weitere Leitung zur Überführung des Filtrates aufweist, die in
   - eine Destillationskolonne (4) mündet, die mit einem Auslass über Kopf für DSA und einer Ausschleusung für das Gemisch (TSA, L) vom Sumpf ausgestattet ist, die in
   - eine Destillationskolonne (11) mündet, die mit einem Auslass über Kopf für TSA
      und einer Ausschleusung für das Lösungsmittel (L) vom Sumpf ausgestattet ist, und einer Ausschleusung vom Reaktorsumpf für das Sumpfproduktgemisch (PS, L, NH₄Cl), die in
   - eine nachgeschaltete Filtereinheit (5) mündet, die zumindest einen Feststoffauslass für NH₄Cl und eine weitere Leitung zur Überführung des Filtrates bestehend aus Polysilazanen und Lösungsmittel in einen Behälter (9) aufweist, an den wiederum
      eine Destillationskolonne (10) angeschlossen ist, die mit einem Auslass über Kopf für Lösungsmittel und einer Ausschleusung für ein aufkonzentriertes Gemisch aus Polysilazanen (PS) und Lösungsmittel (L) vom Sumpf ausgestattet ist.

Die erfindungsgemäße Anlage stellt TSA und Polysilazan-Lösung in hochreiner Qualität bereit.

Die erfindungsgemäße Anlage ist schematisch in **Fig. 1** gezeigt. Die Bezugszeichen bedeuten
- 1: Reaktor
- 2: Destilliereinheit
- 3: Filtereinheit
- 4: Destillationskolonne
- 5: Filtereinheit
- 6: Behälter
- 7: Wärmeaustauscher
- 8: Vakuumpumpe
- 9: Behälter
- 10: Destillationskolonne
- 11: Destillationskolonne

Die Destilliereinheit (2) ist im Rahmen der Erfindung gleichbedeutend mit einer Packungskolonne. Sie kondensiert Toluol partiell aus und erhöht so den TSA-Gehalt in der in Schritt (c) aus dem Reaktor abgezogenen Gasphase.

Mittels Destillationskolonne (4) wird der Anteil DSA aus dem Filtrat aus der Filtereinheit (3) verringert oder entfernt. Die Destillationskolonne (11) wird im erfindungsgemäßen Verfahren eingesetzt, um das TSA in der gewünschten Reinheit zu erzeugen.

Die erfindungsgemäßen Anlagenteile, die mit den erfindungsgemäß eingesetzten Stoffen in Berührung kommen, sind bevorzugt aus rostfreiem Stahl ausgeführt und geregelt kühl- bzw. beheizbar.

In einer weiteren Ausprägung des erfindungsgemäßen Verfahrens kann im Schritt (a) zusätzlich zu dem in einem Lösungsmittel (L) gelösten MCS Dichlorsilan (DCS) beigemischt sein. Somit kann im Schritt (a) ein Gemisch aus MCS und DCS in einem Lösungsmittel (L) gelöst in dem Reaktor (1) flüssig vorgelegt werden.

In diesem Fall werden im erfindungsgemäßen Verfahren MCS und DCS im Reaktor (1) vollständig mit Ammoniak umgesetzt. Hierdurch wird eine Reaktion von MCS und/oder DCS mit Disilylamin unter Bildung von Ammoniumchlorid in nachgelagerten Anlagenteilen zur Aufreinigung des TSAs vollständig verhindert. Im erfindungsgemäßen Verfahren sind die im Anschluss an den Reaktor filtrierten Lösungen vollständig frei von Feststoffen. Eingesetzte Destillationskolonnen enthalten nach Abschluss der Destilliervorgänge weder Feststoffe, noch Ablagerungen.

Wird im Schritt (a) ein Gemisch aus MCS und DCS eingesetzt, dann werden Polysilazane mit höherer Molmasse erhalten, als bei Einsatz von reinem Monochlorsilan. Solche Polysilazane sind in der Tabelle 1 nicht aufgeführt. Allerdings ist durch das Vorhandensein von DCS die TSA-Ausbeute geringer, als bei Einsatz von reinem Monochlorsilan.

Somit hat das erfindungsgemäße Verfahren den Vorteil, gegen Beimischungen von DCS zum MCS im Schritt (a) tolerant zu sein, und es hat den Vorteil, dass auch im Falle solcher Beimischungen weder Feststoffe noch Ablagerungen in dem Reaktor nachgelagerten Anlagenteilen zur Aufreinigung des TSA gebildet werden.

Das erfindungsgemäße Verfahren wird im Folgenden anhand von Beispielen näher erläutert.

### Beispiel 1

In einen zuvor mit Inertgas gespülten 51-Rührwerksautoklav mit Kühl- und Heizmodus wurden 3400 ml Toluol und anschließend 453 g Monochlorsilan, das zusätzlich 34 g Dichlorsilan enthielt, eingefüllt. Innerhalb eines Zeitraums von 6,5 h erfolgte die Dosierung von 196 g Ammoniak in die Lösung. Die Temperatur betrug während der Dosierung konstant -15 °C. Der Druck betrug während der Dosierdauer konstant 3,1 bar a.

Anschließend wurde im Reaktor ein Druck von 0,5 bar a eingestellt und der Rührwerksautoklav beheizt. Mittels einer angeschlossenen Destillationskolonne erfolgte das Abdestillieren von 58 g TSA mit Anteilen an Toluol und Spuren an Ammoniumchlorid, DSA. Durch Filtration und anschließende Destillation wurde TSA mit einer Reinheit von über 99,5 Gew.-% erhalten.

Die im Rührwerksautoklav noch befindliche Lösung von Polysilazanen, Toluol und Ammoniumchlorid wurde abgelassen und filtriert. Die Lösung von Polysilazanen und Toluol wurde anschließend einer Destillationskolonne zugeführt, aus der reines Toluol über Kopf abdestilliert und eine Lösung von Toluol mit einem erhöhten Polysilazananteil aus dem Sumpf abgezogen wurde.

Die filtrierten Lösungen waren vollständig frei von Feststoffen. Die eingesetzten Destillationskolonnen enthielten nach Abschluss der Destilliervorgänge keinerlei Feststoffe bzw. Ablagerungen.

### Beispiel 2

In einen zuvor mit Inertgas gespülten 51-Rührwerksautoklav mit Kühl- und Heizmodus wurden 3400 ml Toluol und anschließend 463 g Monochlorsilan, das zusätzlich 19 g Dichlorsilan enthielt, eingefüllt. Innerhalb eines Zeitraums von 6,5 h erfolgte die Dosierung von 192 g Ammoniak in die Lösung. Die Temperatur betrug während der Dosierung konstant -15 °C. Der Druck stieg während der Dosierdauer von 3,2 auf 3,9 bar a an.

Anschließend wurde im Reaktor ein Druck von 0,5 bar a eingestellt und der Rührwerksautoklav beheizt. Mittels einer angeschlossenen Destillationskolonne erfolgte das Abdestillieren von 81 g TSA mit Anteilen an Toluol und Spuren an Ammoniumchlorid, DSA. Durch Filtration und anschließende Destillation wurde TSA mit einer Reinheit von über 99,5 Gew.-% erhalten.

Die im Rührwerksautoklav noch befindliche Lösung von Polysilazanen, Toluol und Ammoniumchlorid wurde abgelassen und filtriert. Die Lösung von Polysilazanen und Toluol wurde anschließend einer Destillationskolonne zugeführt, aus der reines Toluol über Kopf abdestilliert und eine Lösung von Toluol mit einem erhöhten Polysilazananteil aus dem Sumpf abgezogen wurde.

Die filtrierten Lösungen waren vollständig frei von Feststoffen. Die eingesetzten Destillationskolonnen enthielten nach Abschluss der Destilliervorgänge keinerlei Feststoffe bzw. Ablagerungen.

### Beispiel 3

In einen zuvor mit Inertgas gespülten 51-Rührwerksautoklav mit Kühl- und Heizmodus wurden 3400 ml Toluol und anschließend 429 g Monochlorsilan, das zusätzlich 54 g Dichlorsilan enthielt, eingefüllt. Innerhalb eines Zeitraums von 6,5 h erfolgte die Dosierung von 197 g Ammoniak in die Lösung. Die Temperatur betrug während der Dosierung konstant 0 °C. Der Druck fiel während der Dosierdauer von 4,3 auf 4,2 bar a.

Anschließend wurde im Reaktor ein Druck von 0,5 bar a eingestellt und der Rührwerksautoklav beheizt. Mittels einer angeschlossenen Destillationskolonne erfolgte das Abdestillieren von 47 g TSA mit Anteilen an Toluol und Spuren an Ammoniumchlorid, DSA. Durch Filtration und anschließende Destillation wurde TSA mit einer Reinheit von über 99,5 Gew.-% erhalten.

Die im Rührwerksautoklav noch befindliche Lösung von Polysilazanen, Toluol und Ammoniumchlorid wurde abgelassen und filtriert. Die Lösung von Polysilazanen und Toluol wurde anschließend einer Destillationskolonne zugeführt, aus der reines Toluol über Kopf abdestilliert und eine Lösung von Toluol mit einem erhöhten Polysilazananteil aus dem Sumpf abgezogen wurde.

Die filtrierten Lösungen waren vollständig frei von Feststoffen. Die eingesetzten Destillationskolonnen enthielten nach Abschluss der Destilliervorgänge keinerlei Feststoffe bzw. Ablagerungen.

## Patentansprüche

1. Verfahren zur Herstellung von Trisilylamin und Polysilazanen in der Flüssigphase, indem man
(a) zumindest Monochlorsilan (MCS) in einem Lösungsmittel (L) gelöst in einem Reaktor (1) flüssig vorlegt, wobei das Lösungsmittel gegenüber Monochlorsilan, Ammoniak, TSA, DSA und Polysilazanen inert ist und einen höheren Siedepunkt als TSA aufweist, und
(b) die Reaktion in Reaktor (1) durchführt, indem man Ammoniak (NH₃) in stöchiometrischem Überschuss gegenüber Monochlorsilan (MCS) in den Reaktor (1) einleitet, und
(c) den Reaktor entspannt, einen Druck von 0,5 bar a bis 0,8 bar a einstellt, das Produktgemisch (TSA, L, NH₄Cl, DSA, NH₃) aus Reaktor (1) gasförmig über Kopf durch eine Destilliereinheit (2) leitet, das NH₃ mittels einer Vakuumeinheit (8) abtrennt, das Produktgemisch (TSA, L, NH₄Cl, DSA) in einem Wärmetauscher (7) kondensiert und das Produktgemisch (TSA, L, NH₄Cl, DSA) in einem Behälter (6) auffängt, anschließend
(d) mittels Filtereinheit (3) filtriert, wobei festes Ammoniumchlorid (NH₄Cl) aus dem Produktgemisch abgetrennt wird,
und man das Filtrat aus der Filtereinheit (3) in die Destillationskolonne (4) führt, in der man DSA über Kopf vom Gemisch (TSA, L) abtrennt, und
das Gemisch (TSA, L) in eine Destillationskolonne (11) führt, in der man TSA über Kopf vom Lösungsmittel (L) abtrennt, wobei das Lösungsmittel zurückgewonnen wird,
und man
(e) das Sumpfproduktgemisch (PS, L, NH₄Cl) aus dem Reaktor (1) durch eine Filtereinheit (5) führt, wobei festes Ammoniumchlorid (NH₄Cl) abgetrennt wird, und ein Gemisch aus Polysilazanen (PS) und Lösungsmittel (L) erhalten und in einem Behälter 9 aufgefangen wird,
und man anschließend
(f) das Gemisch aus Polysilazanen (PS) und Lösungsmittel (L) einer Destillationskolonne (10) zuführt, in der der größte Teil des Lösungmittels über Kopf zurückgewonnen und ein aufkonzentriertes Gemisch aus Polysilazanen (PS) und Lösungsmittel (L) über den Sumpf abgezogen wird.

2. Verfahren nach Anspruch 1,
wobei der stöchiometrische Überschuss des im Schritt (b) in dem Lösungsmittel (L) in den Reaktor (1) eingeleiteten Ammoniaks (NH₃) gegenüber Monochlorsilan 2 bis 20 % beträgt.

3. Verfahren nach Anspruch 1 oder 2,
wobei als Lösungsmittel (L) Toluol eingesetzt wird.

4. Verfahren nach einem der vorhergehenden Ansprüche,
wobei das Lösungsmittel (L) in einem volumenmäßigen Überschuss zu Monochlorsilan (MCS) eingesetzt wird.

5. Verfahren nach einem der vorhergehenden Ansprüche,
**dadurch gekennzeichnet,**
**dass** man die Umsetzung in Reaktor (1) bei einer Temperatur von -60 bis +40 °C durchführt.

6. Verfahren nach einem der vorhergehenden Ansprüche, wobei das nach Schritt (c) erhaltene Destillat mittels Filtereinheit (3) filtriert wird, wobei
festes Ammoniumchlorid (NH₄Cl) aus dem Destillat abgetrennt wird, und man
dieses Filtrat aus der Filtereinheit (3) in die Destillationskolonne (4) führt,
in der man DSA über Kopf vom Gemisch (TSA, L) abtrennt,
und das Gemisch (TSA, L) in die Destillationskolonne (11) führt, in der man TSA über Kopf vom Lösungsmittel (L) abtrennt.

7. Verfahren nach einem der vorgehenden Ansprüche, wobei im Schritt (e)
die Filtration des Sumpfproduktgemisches (PS, L, NH₄Cl) bei einer Temperatur kleiner oder gleich Raumtemperatur durchgeführt wird, wobei ein klares Filtrat erhalten wird,
und/oder im Schritt (f)
die Destillation des Gemisches aus Polysilazanen (PS) und Lösungsmittel (L) bei 0,5 bar a durchgeführt wird.

8. Anlage für die Umsetzung zumindest der Edukte Monochlorsilan (MCS) in einem Lösungsmittel (L) und Ammoniak in der Flüssigphase unter Bildung eines Produktgemisches enthaltend Trisilylamin und Polysilazane,
wobei das Lösungsmittel (L) Toluol ist,
umfassend
- einen Reaktor (1) mit den Zuführungen für die Komponenten Ammoniak, zumindest MCS sowie (L), und
einem Auslass für Produktgemisch (TSA, L, NH₄Cl, DSA, NH₃), der in eine dem Reaktor (1)
- nachgeschaltete Destilliereinheit (2), einen Wärmeaustauscher (7) mit angeschlossener Vakuumpumpe (8) und einen Behälter (6) mündet, der mit einer Leitung zu
- einer Filtereinheit (3) ausgestattet ist, die zumindest einen Feststoffauslass für NH₄Cl und
eine weitere Leitung zur Überführung des Filtrates aufweist, die in
- eine Destillationskolonne (4) mündet, die mit einem Auslass über Kopf für DSA und einer Ausschleusung für das Gemisch (TSA, L) vom Sumpf ausgestattet ist, die in
- eine Destillationskolonne (11) mündet, die mit einem Auslass über Kopf für TSA
und einer Ausschleusung für das Lösungsmittel (L) vom Sumpf ausgestattet ist, und einer Ausschleusung vom Reaktorsumpf für das Sumpfproduktgemisch (PS, L, NH₄Cl), die in
- eine nachgeschaltete Filtereinheit (5) mündet, die zumindest einen Feststoffauslass für NH₄Cl und eine weitere Leitung zur Überführung des Filtrates bestehend aus Polysilazanen und Lösungsmittel aufweist, die in
- einen Behälter (9) und anschließend eine Destillationskolonne (10) mündet, die mit einem Auslass über Kopf für Lösungsmittel (L) und einer Ausschleusung für ein aufkonzentriertes Gemisch von Polysilazanen (PS) und Lösungmittel (L) vom Sumpf ausgestattet ist.

## Claims

1. Process for preparing trisilylamine and polysilazanes in the liquid phase,
wherein
(a) at least monochlorosilane (MCS) dissolved in a solvent (L) is placed in liquid form in a reactor (1), where the solvent is inert towards monochlorosilane, ammonia, TSA, DSA and polysilazanes and has a boiling point higher than that of TSA, and
(b) the reaction is carried out in the reactor (1) by introducing ammonia (NH₃) in a stoichiometric excess relative to monochlorosilane (MCS) into the reactor (1) and
(c) the reactor is depressurized, a pressure of from 0.5 bar a to 0.8 bar a is set, the product mixture (TSA, L, NH₄Cl, DSA, NH₃) is conveyed in gaseous form from the top of the reactor (1) through a distillation unit (2), the NH₃ is separated off by means of a vacuum unit (8), the product mixture (TSA, L, NH₄Cl, DSA) is condensed in a heat exchanger (7) and the product mixture (TSA, L, NH₄Cl, DSA) is collected in a vessel (6),
(d) the product mixture is subsequently filtered by means of filter unit (3), with solid
ammonium chloride (NH₄Cl) being separated off from the product mixture,
and the filtrate is conveyed from the filter unit (3) into the distillation column (4)
in which DSA is separated off at the top from the mixture (TSA, L), and
the mixture (TSA, L) is fed into a distillation column (11)
in which TSA is separated off at the top from the solvent (L), with the solvent being recovered,
and
(e) the bottom product mixture (PS, L, NH₄Cl) is conveyed from the reactor (1) through a filter unit (5) in which solid ammonium chloride (NH₄Cl) is separated off, to give a mixture of polysilazanes (PS) and solvent (L) which is collected in a vessel 9,
and
(f) the mixture of polysilazanes (PS) and solvent (L)
is subsequently fed to a distillation column (10) in which the major part of the solvent is recovered at the top and a concentrated mixture of polysilazanes (PS) and solvent (L) is taken off from the bottom.

2. Process according to Claim 1,
wherein the stoichiometric excess of the ammonia (NH₃) introduced into the solvent (L) in the reactor (1) in step (b) relative to monochlorosilane is from 2 to 20%.

3. Process according to Claim 1 or 2,
wherein toluene is used as solvent (L).

4. Process according to any of the preceding claims,
wherein the solvent (L) is used in a volume excess over monochlorosilane (MCS).

5. Process according to any of the preceding claims, **characterized in that**
the reaction in the reactor (1) is carried out at a temperature of from -60 to
+40°C.

6. Process according to any of the preceding claims, wherein
the distillate obtained after step (c) is filtered by means of filter unit (3), with
solid ammonium chloride (NH₄Cl) being separated off from the distillate,
and
this filtrate is conveyed from the filter unit (3) into the distillation column (4)
in which DSA is separated off at the top from the mixture (TSA, L)
and the mixture (TSA, L) is fed into the distillation column (11)
in which TSA is separated off at the top from the solvent (L).

7. Process according to any of the preceding claims,
wherein
the filtration of the bottom product mixture (PS, L, NH₄Cl) in step (e) is carried out at a temperature of less than or equal to room temperature, giving a clear filtrate,
and/or
the distillation of the mixture of polysilazanes (PS) and solvent (L) in step (f) is carried out at 0.5 bar a.

8. Plant for reaction at least of the starting materials monochlorosilane (MCS) in a solvent (L) and ammonia in the liquid phase to form a product mixture containing trisilylamine and polysilazanes, wherein the solvent (L) is toluene, which comprises
- a reactor (1) having feed lines for the components ammonia, at least MCS and (L) and an outlet for product mixture (TSA, L, NH₄Cl, DSA, NH₃), which opens into a
- distillation unit (2) downstream of the reactor (1), a heat exchanger (7) having an attached vacuum pump (8) and a vessel (6) which is equipped with a line to
- a filter unit (3) which has at least one solids outlet for NH₄Cl and
a further line for transfer of the filtrate which opens into
- a distillation column (4) which is equipped with an outlet at the top for DSA and a discharge facility for the mixture (TSA, L) from the bottom, which opens into
- a distillation column (11) which is equipped with an outlet at the top for TSA and a discharge facility for the solvent (L) from the bottom,
and a discharge facility from the bottom of the reactor for the bottom product mixture (PS, L, NH₄Cl), which opens into
- a downstream filter unit (5) which has at least one
solids outlet for NH₄Cl and a further line for transfer of the filtrate consisting of polysilazanes and solvent which opens into
- a vessel (9) and then a distillation column (10), which distillation column is equipped with an outlet at the top for solvent (L) and a discharge facility for a concentrated mixture of polysilazanes (PS) and solvent (L) from the bottom.

## Revendications

1. Procédé de fabrication de trisilylamine et de polysilazanes dans la phase liquide, selon lequel
(a) au moins du monochlorosilane (MCS) dissous dans un solvant (L) est chargé sous forme liquide dans un réacteur (1), le solvant étant inerte vis-à-vis du monochlorosilane, de l'ammoniac, de la TSA, de la DSA et des polysilazanes, et présentant un point d'ébullition plus élevé que la TSA, et
(b) la réaction est réalisée dans le réacteur (1) par introduction d'ammoniac (NH₃) en excès stoechiométrique par rapport au monochlorosilane (MCS) dans le réacteur (1), et
(c) le réacteur est détendu, une pression de 0,5 bar a à 0,8 bar a est ajustée, le mélange de produits (TSA, L, NH₄Cl, DSA, NH₃) est déchargé du réacteur (1) sous forme gazeuse par la tête par une unité de distillation (2), le NH₃ est séparé par une unité sous vide (8), le mélange de produits (TSA, L, NH₄Cl, DSA) est condensé dans un échangeur de chaleur (7) et le mélange de produits (TSA, L, NH₄Cl, DSA) est collecté dans un contenant (6), puis
(d) filtré au moyen d'une unité de filtration (3), du chlorure d'ammonium solide (NH₄Cl) étant séparé du mélange de produits,
et le filtrat de l'unité de filtration (3) est introduit dans la colonne de distillation (4) dans laquelle la DSA est séparée par la tête du mélange (TSA, L), et
le mélange (TSA, L) est introduit dans une colonne de distillation (11), dans laquelle la TSA est séparée par la tête du solvant (L), le solvant étant récupéré,
et
(e) le mélange de produits de fond (PS, L, NH₄Cl) est déchargé du réacteur (1) par une unité de filtration (5), du chlorure d'ammonium solide (NH₄Cl) étant séparé, et un mélange de polysilazanes (PS) et de solvant (L) étant obtenu et collecté dans un contenant 9,
puis
(f) le mélange de polysilazanes (PS) et de solvant (L) est introduit dans une colonne de distillation (10), dans laquelle la majeure partie du solvant est récupérée par la tête et un mélange concentré de polysilazanes (PS) et de solvant (L) est soutiré par le fond.

2. Procédé selon la revendication 1, dans lequel l'excès stoechiométrique de l'ammoniac (NH₃) introduit dans le solvant (L) dans le réacteur (1) à l'étape (b) par rapport au monochlorosilane est de 2 à 20 %.

3. Procédé selon la revendication 1 ou 2, dans lequel du toluène est utilisé en tant que solvant (L).

4. Procédé selon l'une quelconque des revendications précédentes, dans lequel le solvant (L) est utilisé en un excès en volume par rapport au monochlorosilane (MCS).

5. Procédé selon l'une quelconque des revendications précédentes, **caractérisé en ce que** la réaction est réalisée dans le réacteur (1) à une température de -60 à +40 °C.

6. Procédé selon l'une quelconque des revendications précédentes, dans lequel le distillat obtenu à l'étape (c) est filtré par une unité de filtration (3),
du chlorure d'ammonium solide (NH₄Cl) étant séparé du distillat et
ce filtrat étant introduit depuis l'unité de filtration (3) dans la colonne de distillation (4),
dans laquelle la DSA est séparée par la tête du mélange (TSA, L),
et le mélange (TSA, L) est introduit dans la colonne de distillation (11), dans laquelle la TSA est séparée par la tête du solvant (L).

7. Procédé selon l'une quelconque des revendications précédentes, dans lequel, à l'étape (e),
la filtration du mélange de produits de fond (PS, L, NH₄Cl) est réalisée à une température inférieure ou égale à la température ambiante, un filtrat clair étant obtenu, et/ou à l'étape (f),
la distillation du mélange de polysilazanes (PS) et de solvant (L) est réalisée à 0,5 bar a.

8. Unité pour la mise en réaction d'au moins les réactifs monochlorosilane (MCS) dans un solvant (L) et ammoniac dans la phase liquide avec formation d'un mélange de produits contenant de la trisilylamine et des polysilazanes, le solvant (L) étant le toluène, comprenant
- un réacteur (1) comprenant des alimentations pour les composants ammoniac, au moins MCS et (L), et
une sortie pour le mélange de produits (TSA, L, NH₄Cl, DSA, NH₃), qui débouche en aval du réacteur (1) dans
- une unité de distillation (2), un échangeur de chaleur (7) auquel une pompe à vide (8) est raccordée et un contenant (6) qui est équipé d'une conduite vers
- une unité de filtration (3) qui comprend au moins
une sortie de solides pour NH₄Cl et
une conduite supplémentaire pour le transfert du filtrat, qui débouche dans
- une colonne de distillation (4), qui est équipée d'une sortie par la tête pour la DSA et d'une évacuation pour le mélange (TSA, L) du fond, qui débouche dans
- une colonne de distillation (11), qui est équipée d'une sortie par la tête pour la TSA et d'une évacuation pour le solvant (L) du fond,
et une évacuation du fond du réacteur pour le mélange de produits de fond (PS, L, NH₄Cl), qui débouche dans
- une unité de filtration (5) en aval, qui comprend au moins une sortie de solides pour NH₄Cl et une conduite supplémentaire pour le transfert du filtrat constitué de polysilazanes et de solvant, qui débouche dans
- un contenant (9), puis une colonne de distillation (10), qui est équipée d'une sortie par la tête pour le solvant (L) et d'une évacuation pour un mélange concentré de polysilazanes (PS) et de solvant (L) du fond.
